# EUROPEAN PATENT SPECIFICATION

(11) **EP 0 615 666 B1**
(45) Date of publication and mention of the grant of the patent: **02.08.1995**
(21) Application number: 92924997.7
(22) Date of filing: 03.12.1992
(51) Int. Cl.: H02G 3/04

(54) **CABLE TRUNKING**
KABELKANAL
CANAL A CABLE

(30) Priority: 04.12.1991 SE 9103607
(43) Date of publication of application: 21.09.1994
(73) Proprietor: JELBRING, Per Erik, S-135 55 Tyresö (SE)
(72) Inventor: JELBRING, Per Erik, S-135 55 Tyresö (SE)
(74) Representative: Nilsson, Karl Ingvar
(86) International application number: SE9200839
(87) International publication number: WO9311592

(56) References cited:
- CH-A- 499 219
- CH-A- 512 841

## Description

The present invention relates to a cable trunk or duct according to the preamble of Claim 1.

A cable duct or trunk which includes concealed electric sockets, or corresponding outlets, is illustrated in CH-A-512,841. In the case of the known cable duct, the lower shelf has an inner shelf part which extends along the full length of the duct, and a plurality of mutually spaced intermediate shelf parts. These shelf parts are detachably hung on a strip which projects up from the outer edge of the inner shelf part, and support, in turn, detachably along their outer edge a rail which is provided in the upper side thereof with twin grooves which receive displaceable front covering parts. The front parts are guided in corresponding grooves provided in the underside of the upper shelf. The lower shelf is thus comprised of a relatively large number of different parts, and the front parts, the rail and the intermediate shelf parts are supported solely by said inner shelf part, resulting in complicated fitting and installation procedures and also in the inducement of considerable stresses in the inner shelf part.

The object of the present invention is to provide a novel and advantageous cable duct or trunk construction with which the aforesaid drawbacks are at least essentially avoided.

To this end, it is suggested that a cable duct is constructed in accordance with the characterizing features set forth in Claim 1. This inventive arrangement provides a cable duct which can be manufactured and installed simply and economically, and a cable duct which has an aesthetic appearance and which can be readily supplemented after manufacture with further electric sockets or corresponding electrical outlets when so required. Together with the spacing members, the snap-over front parts embracing the shelves provide a rigid construction in which any stresses that might occur are favourably distributed between the two shelves.

Other characteristic features of the invention and advantages afforded thereby will be apparent from the depending Claims and from the following description of an exemplifying embodiment of the invention illustrated in the accompanying drawings, in which
- Figure 1: is a perspective view of an inventive cable duct;
- Figure 2: is a cross-sectional view of the duct shown in Figure 1;
- Figure 3: is a side view of a spacing member, seen from the right in Figure 2; and
- Figure 4: illustrates a starting blank from which the distance member shown in Figures 2 and 3 is produced.

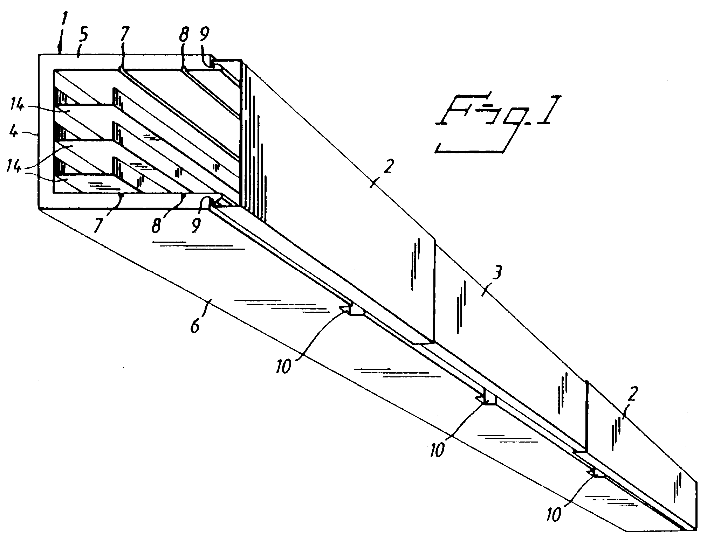

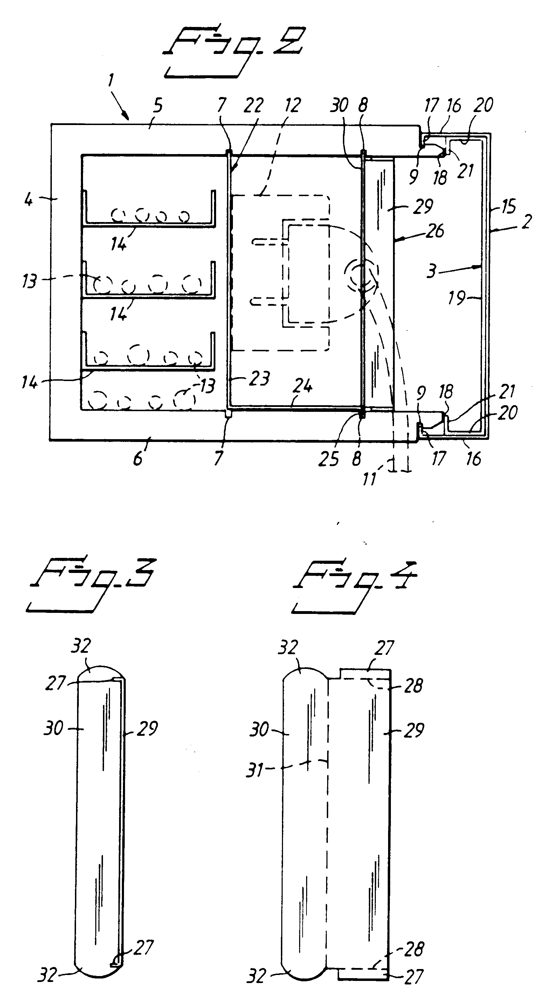

The cable duct shown in Figure 1 has the form of an elongated box profile which is comprised of a body 1 of U-shape cross-section and a front which comprises several parts 2, 3. In the illustrated case, the body 1 is assumed to be manufactured from particle board, although it may alternatively be comprised of extruded plastic material or extruded metal, for instance aluminium. The body 1 includes a base part 4 and shelves or ledges 5, 6 which project out from the edges of the base part. Each of the mutually facing sides of the shelves 5, 6 is provided with mutually spaced grooves 7 and 8 which extend along the full length of the shelves 5, 6 in spaced relationship with the longitudinally extending edges of the shelves, wherein the grooves of one surface lie opposite the grooves of the other surface. The shelves 5, 6 are also provided with grooves 9 in recesses formed in the opposing facing sides of said shelves, along the longitudinally extending edges distal from the base part 4. The reference numeral 10 identifies penetrating openings or throughlets for cables which extend between electric sockets concealed within the duct, to apparatus (not shown) such as light fittings, telephones, computers, etc., connected to said electric sockets or corresponding outlets. The reference numeral 11 in Figure 2 identifies one such cable which is connected by means of an electric plug to an electric socket, indicated at 12, which in turn is connected to an associated cable 13 within the duct, in a manner not shown.

The cables 13 are supported in the cable duct by means of channels 14, which are carried in turn by the base part 4.

The base part is intended to be mounted at windowback height in relation to an external wall of an office locality in a position in which the shelves 5, 6 are horizontal and the upper shelf is located immediately beneath a window sill or ledge or supports or forms a window sill or part of a window sill. The base part 4 may be placed contiguous with or spaced from the wall and extend parallel therewith. The body 1 is intended to extend between two mutually opposing walls in the office location, said walls extending inwardly from the external wall and possibly provided with cable throughlets opposite the ends of the cable duct.

Each of the front parts 2 includes a covering panel 15. Extending from the panels 15 are flanges 16 which have inwardly angled end-parts 17 which are intended to snap resiliently into the grooves 9 such as to hold the parts 2 firmly in relation to the body 1. In the Figure 1 embodiment, the front parts 2 are attached to opposite ends of the body 1, whereas the front part 3 covers the space between the parts 2. The extension or height of the flanges 16, or the extent to which the flanges 16 extend from the panel 15, is such as to form a space between the panel 15 and the outer edges 18 of the shelves 5, 6. This space receives the opposite ends of the front part 3. Similar to the front parts 2, the front part 3 includes a covering panel 19, legs 20 and inwardly angled end-parts 21. The front part 3 is guided for movement by the panels 15 of the front parts 2, the legs 16 and the shelf edges 18, as will best be seen from Figure 2.

The reference 22 in Figure 2 identifies generally an electric socket holder which has the form of an L-shaped, resilient profiled member which includes a staple 23 and a base 24. An upper end-part of the staple is received in the groove 7 of the upper shelf 4, while the base 24 rests against the upper side of the shelf 6 and has a downwardly angled part 25 which projects into the groove 8 in the shelf 6. The arrangement may include on or more holders 22, which are provided with attachment openings in which electrical sockets are fitted. The holders 22 can be readily removed and reinserted and can be reached from outside the cable duct by moving the covering part 3 to one side, behind one or the other of the covering parts 2.

The reference 26 identifies generally a spacing member which can be removably inserted between the shelves 5, 6 and which has a high buckling resistance. Figure 4 illustrates a starting blank from which the spacing member 26 is produced. The spacing member 26 is produced by bending the lugs 27 along the broken lines 28, through an angle of 90° in the plane of the drawing and then bending the panel 29 along the broken line 31, through an angle of 90° in relation to the panel 30, such as to form the distance member shown from different directions in Figures 2 and 3. The distance between the lines 28 corresponds to the desired distance between the inner surfaces of the shelves 5, 6. The panel 30 has curved projections 32 at the top and the bottom ends thereof, these projections being received in the grooves 8 of the shelves 5, 6. It will be seen that the distance members 26 can be readily removed and reinserted.

It will be understood that the invention is not restricted to the aforedescribed and illustrated embodiment thereof and that modifications and changes can be made within the scope of the following Claims. For instance, the body 1 and also the front parts 2 and 3 may advantageously be comprised of rolled metal sheet. The extent to which the front parts 2, 3 of the finished cable duct overlap one another may be chosen according to requirements and such as to reduce cutting of said front parts to a minimum and therewith simplify fitting of the front parts to the body 1.

## Claims

1. A cable duct for horizontally drawn cables (13) for connection to electrical, telephone, computer apparatus, etc., in the form of an elongated box-profile comprising a base part (4) which is intended to be mounted preferably at windowback height in relation to and at least essentially parallel with a wall, shelves (5, 6) which project out from mutually opposite, longitudinally extending edges of the base part, of which shelves the lowermost shelf (6) in the assembled state of the cable duct is provided with cable throughlets (10) for cables (11) which pass between electric sockets or outlets (12) concealed within the duct to equipment, such as light fittings, telephones, computers, etc., connected to said sockets or outlets, and which duct further comprises a front covering (2, 3) which extends along the length of the duct between the shelf edges remote from the base part and which permits access to the duct interior, wherein the front covering is divided along the length of the duct into two or more front parts of which at least one front part (3) can be moved along the duct and along at least one neighbouring front part (2),
**characterized** in that the movable front part (3) is movably mounted in at least one neighbouring front part (2) which, in turn, can be snapped resiliently into fittings (9) which are formed in the shelves (5, 6) adjacent the longitudinally extending outer edges thereof remote from the base part (4); in that the snap-in front part (2) has flanges (16) which project out from a covering panel (15) and which are intended to engage longitudinally extending grooves (9) in the shelves (5, 6) and which have inwardly angled outer end-parts (17) which resiliently engage said grooves (9); and in that removably insertable buckling-resistant spacer members (26) are fitted in the interspace between the shelves (5, 6).

2. A cable duct according to Claim 1, **characterized** in that the height or extension of the flanges (16) is greater than the distance between grooves (9) and the longitudinally extending outer edges of the shelves (5, 6) so as to form an interspace between the cover panel (15) and said outer edges, wherein the movable front part (3) fits into and is accommodated by said interspace.

3. A cable duct according to Claim 1 or 2, **characterized** by electrical socket holders (22) capable of being snapped resiliently into fittings, preferably fittings in the form of grooves (7, 8) which extend longitudinally along the mutually facing sides of the shelves (5, 6).

4. A cable duct according to Claim 3, **characterized** in that the socket holders (22) have the form of a generally L-shaped, resilient profiled member comprising a staple (23) whose length slightly exceeds the distance between the mutually opposing sides of the shelves, and a base (24) which is angled from one end-part of the staple: in that the opposite end-part of the staple is intended to be received in a longitudinally extending groove (7) provided in the inside of one shelf (5), whereas the base (24) is intended to abut the inner surface of the other shelf (6) and has a part (25) which is angled in a direction opposite to the direction of the staple (23) and which is received in a longitudinally extending groove (8) provided in the inner surface of the other shelf (6).

5. A cable duct according to any one of Claims 1-4, **characterized** in that the spacing members (26) are intended to be received in mutually opposite grooves (8) in the mutually facing sides of the shelves.

## Patentansprüche

1. Kabelkanal für horizontal verlegte Kabel (13) zum Anschließen an elektrische, Telefon-, Computer-Geräte usw., in Gestalt eines langgestreckten Boxprofiles, mit einer Basis (4), bestimmt zur Montage in Fensterhöhe in Bezug zu einer Wand und wenigstens parallel hierzu, Platten (5,6), die auf einander abgewandten Längskanten der Basis stehen, und deren unterste (6) im montierten Zustand des Kabelkanales mit Kabeldurchlässen (10) für Kabel (11) versehen ist, die zwischen elektrischen Fassungen oder Auslässen (12) verlaufen, die innerhalb des Kabels angeschlossen sind, zu Geräten wie Stromfittings, Telefonen, Computern, usw. angeschlossen an die genannten Fassungen oder Auslässe, wobei der Kanal weiterhin eine Frontabdeckung (2,3) umfaßt, die sich über die Länge des Kanales zwischen den Plattenkanten entfernt von der Basis erstrecken, und die einen Zugang zum Inneren des Kanales erlauben, wobei die Frontabdeckung über die Länge des Kanales in zwei oder mehrere Frontteile unterteilt ist, von denen wenigstens ein Frontteil 3 entlang des Kanales und entlang wenigstens eines benachbarten Frontteiles (2) bewegbar ist, dadurch gekennzeichnet, daß das bewegbare Frontteil (3) in wenigstens einem benachbarten Frontteil (2) beweglich gelagert ist, das seinerseits elastisch in Fittings (9) einschnappen kann, die in den Platten (5,6) in der Nähe der längs sich erstreckenden Außenkanten entfernt der Basis (4) eingeformt sind, daß das einschnappende Frontteil (2) Flansche (16) aufweist, die sich von einem Abdeckpaneel (15) aus erstrecken und die dazu dienen, in Längsnuten (9) in den Platten (5,6) einzugreifen, und die nach innen abgekröpfte äußere Endstücke aufweisen, die elastisch in die Nuten (9) eingreifen, und daß entfernbare, knicksteife Abstandselemente in den Zwischenraum zwischen den Platten (5,6) eingepaßt sind.

2. Kabelkanal nach Anspruch 1, dadurch gekennzeichnet, daß die Höhe oder Erstreckung der Flansche (16) größer als der Abstand zwischen den Nuten (9) und den sich in Längsrichtung erstreckenden Außenkanten der Platten (5,6) ist, um einen Zwischenraum zwischen dem Abdeckpaneel (15) und den Außenkanten zu schaffen, in welchem das bewegliche Frontteil (3) in den genannten Zwischenraum paßt und in diesem aufgenommen ist.

3. Kabelkanal nach Anspruch 1 oder 2, gekennzeichnet durch elektrische Fassungshalter (22) zum elastischen Einschnappen in Fittings, vorzugsweise Fittings in Gestalt von Nuten (7,8), die sich in Längsrichtung entlang der einander zugewandten Flächen der Platten (5,6) erstrecken.

4. Kabelkanal nach Anspruch 3, dadurch gekennzeichnet, daß die Fassungshalter (22) die Form eines im wesentlichen L-förmigen, elastischen Profilelementes haben, mit einer Klammer (23), deren Lange den Abstand zwischen den einander zugewandten Flächen der Platten geringfügig übersteigt, und eine Basis (24), die sich unter einem Winkel vom einen Ende der Klammer aus erstreckt, daß die einander abgewandten Endteile der Klammer dazu dienen, in einer Längsnut (7) in der Innenseite einer Platte (5) aufgenommen zu werden, während Basis (24) dazu dient, an der Innenfläche der anderen Platte (6) anzuliegen, und einen Teil (25) aufweist, der in einer Richtung abgekröpft ist, die der Richtung der Klammer (23) abgewandt ist, und der in einer sich längs erstreckenden Nut (8) aufgenommen wird, die ihrerseits in der Innenfläche der anderen Platte (6) vorgesehen ist.

5. Kabelkanal nach einem der Ansprüche 1 bis 4, dadurch gekennzeichnet, daß die Abstandselemente (26) dazu vorgesehen sind, in einander gegenüberliegenden Nuten (8) in den einander zugewandten Flächen der Platten aufgenommen zu werden.

## Revendications

1. Un canal à câbles pour des câbles (13) tirés horizontalement en vue d'une liaison à des appareils électriques, téléphoniques, informatiques, etc., sous la forme d'une boîte allongée comprenant une partie de base (4) qui est prévue pour être montée de préférence à la hauteur des dos de fenêtres par rapport à un mur et de manière au moins sensiblement parallèle à lui, des parois (5, 6) qui font saillie des bords mutuellement opposés, s'étendant longitudinalement, de la partie de base, parois dont la paroi la plus basse (6) dans l'état assemblé du canal à câbles est munie de sorties de câble (10) pour des câbles (11) qui passent entre des prises ou sorties électriques (12) dissimulées à l'intérieur du canal pour des équipements, tels que des dispositifs lumineux, des téléphones, des ordinateurs, etc., reliés auxdites prises ou sorties, et canal qui comprend en outre un recouvrement frontal (2, 3) qui s'étend sur la longueur du canal entre les bords des parois éloignés de la partie de base et qui permet d'accéder à l'intérieur du canal, le recouvrement frontal étant divisé sur la longueur du canal en deux parties frontales ou davantage dont au moins une partie frontale (3) peut être déplacée le long du canal et le long d'au moins une partie frontale voisine (2), **caractérisé** en ce que la partie frontale mobile (3) est montée de manière mobile dans au moins une partie frontale voisine (2) qui, à son tour, peut être encliquetée de manière élastique dans des montures (9) qui sont formées dans les parois (5, 6) de manière adjacente à leurs bords externes s'étendant longitudinalement éloignés de la partie de base (4) ; en ce que la partie frontale encliquetable (2) présente des brides (16) qui font saillie hors d'un panneau de recouvrement (15) et qui sont prévues pour s'engager dans des rainures (9) s'étendant longitudinalement dans les parois (5, 6) et qui présentent des parties d'extrémité (17) externes repliées vers l'intérieur qui s'engagent de manière élastique dans lesdites rainures (9) ; et en ce que des éléments d'espacement (26) résistant à la déformation et pouvant être insérés de manière amovible sont montés dans l'intervalle entre les parois (5, 6).

2. Un canal à câbles selon la revendication 1, **caractérisé** en ce que la hauteur ou l'extension des brides (16) est supérieure à la distance entre les rainures (9) et les bords externes s'étendant longitudinalement des parois (5, 6) afin de former un intervalle entre le panneau de recouvrement (15) et lesdits bords externes, la partie frontale mobile (3) s'adaptant dans ledit intervalle et étant monté dans ce dernier.

3. Un canal à câbles selon la revendication 1 ou 2, **caractérisé** par des porte-prises électriques (22) pouvant être encliquetées de manière élastique dans des montures, de préférence des montures, en forme de rainures (7, 8) qui s'étendent longitudinalement le long des côtés se faisant mutuellement face des parois (5, 6).

4. Un canal à câbles selon la revendication 3, **caractérisé** en ce que les porte-prises (22) ont la forme d'un profilé élastique de forme générale en L comprenant une cloison (23) dont la longueur excède légèrement la distance entre les côtés mutuellement opposés des parois, et une base (24) qui est disposée angulairement à partir d'une partie d'extrémité de la cloison ; en ce que la partie d'extrémité opposée de la cloison est prévue pour être reçue dans une rainure (7) s'étendant longitudinalement prévue à l'intérieur d'une paroi (5), tandis que la base (24) est prévue pour venir en butée contre la surface interne de l'autre paroi (6) et présente une partie (25) qui est disposée angulairement dans une direction opposée à la direction de la cloison (23) et qui est montée dans une rainure (8) s'étendant longitudinalement prévue dans la surface interne de l'autre paroi (6).

5. Un canal à câbles selon une quelconque des revendications 1 à 4, **caractérisé** en ce que les éléments d'espacement (26) sont prévus pour être montés dans des rainures mutuellement opposées (8) dans les côtés se faisant mutuellement face des parois.
